(19) Europäisches Patentamt
European Patent Office
Office européen des brevets

(11) Numéro de publication: **0 297 002**
**B1**

(12) **FASCICULE DE BREVET EUROPEEN**

(45) Date de publication du fascicule du brevet: **06.02.91**

(51) Int. Cl.$^{5}$: **B 61 F 15/28**

(21) Numéro de dépôt: **88420213.6**

(22) Date de dépôt: **22.06.88**

# (54) Dispositif de retour de courant pour véhicules sur rails.

(30) Priorité: **22.06.87 FR 8708899**

(43) Date de publication de la demande:
**28.12.88 Bulletin 88/52**

(45) Mention de la délivrance du brevet:
**06.02.91 Bulletin 91/06**

(84) Etats contractants désignés:
**BE CH DE ES GB IT LI NL**

(56) Documents cités:
**FR-A-1 547 620**
**FR-A-2 248 186**

(73) Titulaire: **FERRAZ Société Anonyme**
**28 Rue Saint Philippe**
**F-69003 Lyon (FR)**

(72) Inventeur: **Dumont, Alain**
**12 Rue Beaudelaire**
**F-69330 Meyzieu (FR)**

(74) Mandataire: **Monnier, Guy et al**
**Cabinet Monnier 150 Cours Lafayette B.P. 3058**
**F-69393 Lyon Cédex 03 (FR)**

**EP 0 297 002 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a trait aux dispositifs de retour de courant utilisés dans l'industrie du matériel ferroviaire en vue d'assurer la transmission du courant électrique entre le châssis des véhicules et les rails de roulement.

On sait que les dispositifs du genre en question comprennent le plus souvent un boîtier ouvrable à profil circulaire qui est fixé sur le châssis du véhicule considéré et qui renferme trois balais de jonction que des ressorts de pression, amarrés par l'une de leurs extrémités à une partie fixe à profil plan appliquent en permanence contre un organe collecteur tournant rendu solidaire du moyeu de l'une des roues. On conçoit qu'il suffit dans ces conditions de relier chacun des balais à un élément quelconque du châssis pour obtenir la jonction électrique de ce dernier avec les rails sur lesquels portent les roues.

Le document FR-A-1 547 620 LUCIEN FERRAZ ET CIE illustre bien cette technique.

Il va de soi que ces dispositifs de retour de courant doivent présenter une construction très robuste du fait des vibrations et chocs auxquels ils sont soumis de par leur emplacement au niveau des roues lors de la circulation du véhicule. On observera que cet emplacement les rend particulièrement vulnérables aux projections d'eau et à la corrosion qui y fait suite. Les balais s'usent de manière particulièrement rapide et leur remplacement ne doit pas nécessiter des opérations compliquées et coûteuses.

C'est à la solution de l'ensemble de ces problèmes que la présente invention entend s'attacher.

Le dispositif de retour de courant suivant l'invention est défini à la revendication 1.

Le dessin annexé, donné à titre d'exemple, permettra de mieux comprendre l'invention, les caractéristiques qu'elle présente et les avantages qu'elle est susceptible de procurer:

Fig. 1 est une vue en élévation d'un dispositif de retour de courant établi conformément à l'invention, le couvercle du boîtier ayant été supposé partiellement arraché.

Fig. 2 est une coupe diamétrale suivant le plan indiqué en II—II en fig. 1.

Fig. 3 est une vue en perspective montrant, à la position démontée, l'une des agrafes de fixation et les éléments qui lui sont associés.

Fig. 4 est une coupe montrant cette agrafe à l'état monté.

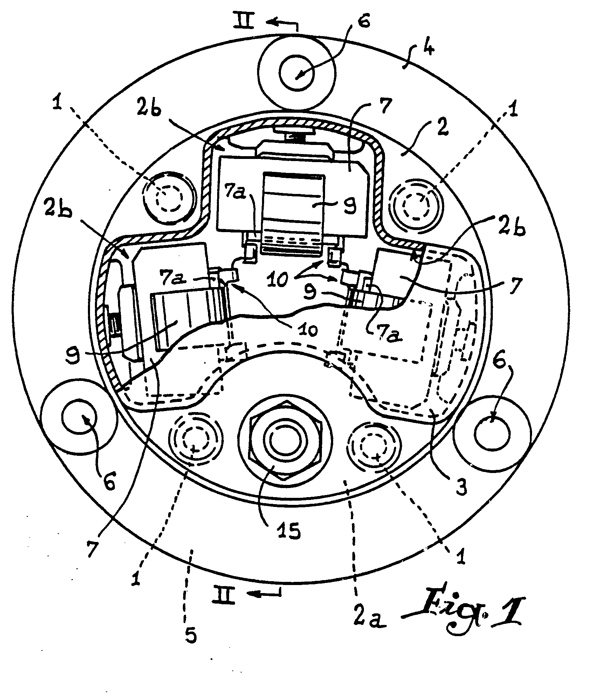

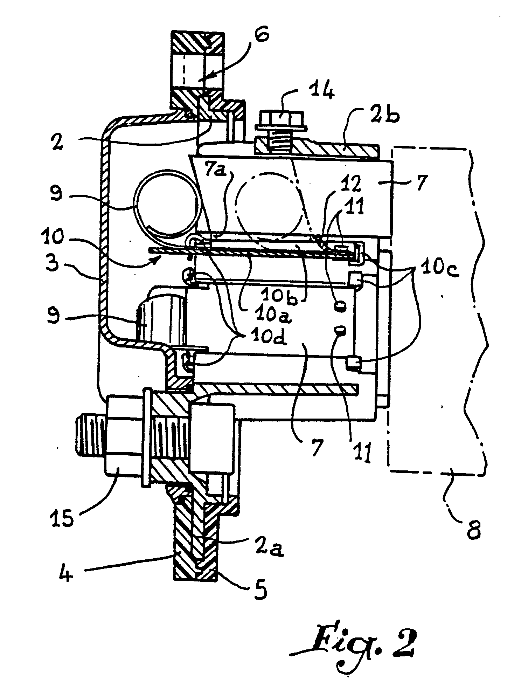

Le dispositif représenté en fig. 1 et 2 comprend un boîtier formé par l'assemblage, à l'aide de vis telles que 1, d'une cage 2 à profil circulaire et d'un couvercle 3. Il convient d'observer que le bord annulaire 2a (fig. 2) de la cage 2 se trouve pris en sandwich entre deux anneaux 4 et 5 établis en matière synthétique et profilés de façon à être réunis l'un à l'autre par soudage haute-fréquence; cette disposition particulière opère la protection et l'isolation du bord 2a, en même temps qu'elle permet la réalisation de trois cheminées isolées 6 destinées à recevoir les vis pour la fixation du boîtier 2-3 sur le châssis du véhicule roulant.

La cage 2 est conformée de manière à définir un certain nombre de gaines horizontales 2*b* orientées parallèlement les unes aux autres et ouvertes à leurs deux extrémités. Dans l'exemple de réalisation envisagé, ces gaines 2*b* sont au nombre de trois et on notera qu'elles sont disposées à environ 60° les unes par rapport aux autres de façon à se trouver toutes trois situées dans la partie supérieure du boîtier 2—3. On évite de la sorte l'écoulement éventuel de l'eau et des pollutions sur une gaine inférieure, qui pourrait perturber le coulissement du balai correspondant.

Dans chaque gaine 2*b* est monté à coulissement un balai 7 dont l'une des extrémités est destinée à venir porter contre un disque collecteur 8 (fig. 2) solidaire de l'une des roues du véhicule ferroviaire, tandis que l'extrémité opposée reçoit la pression élastique d'un ressort 9, formé à la façon en soi connue par une lame métallique enroulée.

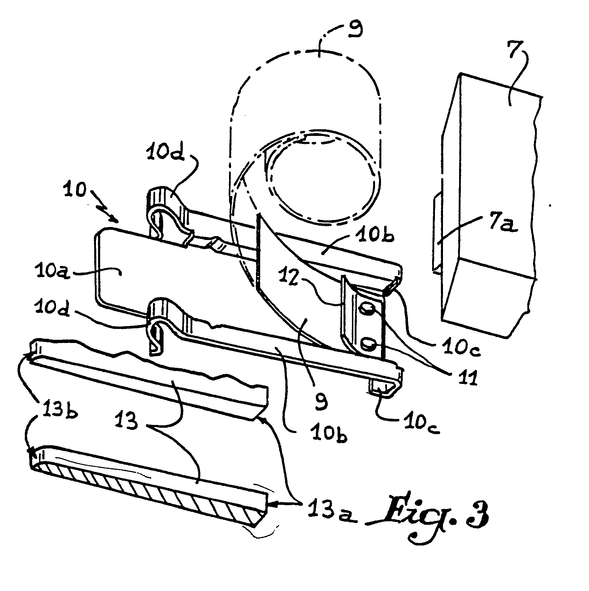

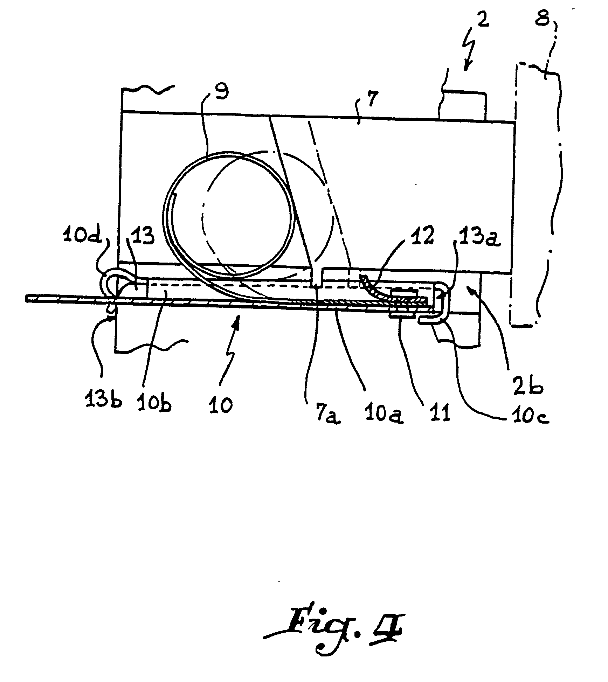

Pour assurer la fixation du ressort 9 associé à chaque balai 7, on a recours à l'agrafe 10 représentée en fig. 3 et 4. Cette agrafe 10, réalisée en un métal élastiquement déformable, comprend une partie centrale plane 10*a* bordée par deux renforts 10*b* qui font saillie sur la face de l'agrafe-qui est tournée en direction du balai 7. L'une des extrémités de cette partie centrale 10*a* est percée pour le passage de deux rivets 11 qui traversent l'extrémité à fixer du ressort 9 et une plaquette de retenue 12. On observera que les renforts 10*b* bordent l'extrémité du ressort 9 qui est ainsi maintenu latéralement.

L'extrémité de chaque renfort qui est tournée en direction du balai 7 est repliée deux fois à l'équerre pour former un rebord 10*c* conformé de manière à venir se crocheter contre la facette d'extrémité ou bord 13*a* de l'une ou de l'autre de deux saillies ou nervures parallèles 13 de la cage 2. Par ailleurs, l'extrémité opposée des renforts 10*b* est cintrée et roulée en vue de déterminer un crochet 10*d* qui, après engagement des rebords 10*c* contre les faces 13*a*, est susceptible, moyennant une déformation élastique momentanée de son ouverture, de venir prendre appui contre les facettes ou bords opposés 13*b* des saillies 13.

L'agrafe se trouve alors fermement immobilisée dans le boîtier 2—3 et assure ainsi la fixation parfaite du ressort 9 associé au balai 7 envisagé.

On remarquera que la plaquette 12 présente un profil cintré tel que, comme montré en fig. 4, son bord libre dépasse en avant des renforts latéraux 10*b* de l'agrafe 10 et vient de ce fait se disposer sur le trajet d'un bec 7*a* prévu en saillie sur le balai 7. On comprend que la coopération de ce bec 7*a* et de la plaquette 12 limite le coulissement du balai 7 qui intervient au cours de l'usure de celui-ci, en évitant tout risque d'endommagement dû à une usure exagérée.

Chaque balai 7 est relié par des conducteurs (non représentés) à une borne 14 vissée dans la gaine correspondante 2*b* et la cage 2 porte une borne commune 15 propre à être réunie par une tresse au châssis du véhicule ferroviaire. On est ainsi assuré que ce châssis est bien relié aux rails par l'intermédiaire du dispositif de retour de courant.

Il va de soi que le nombre des balais peut varier dans une certaine mesure.

## Revendications

1. Dispositif de retour de courant pour véhicules sur rails, du genre comprenant un boîtier (2) ouvrable renfermant des balais (7) que des ressorts de pression (9), amarrés par l'une de leurs extrémités à une partie fixe à profil plat (10*a*), tendent à maintenir appliqués contre un collecteur tournant, caractérisé en ce que la partie plane d'amarrage (10*a*) fait partie d'une agrafe (10) qui comporte, de part et d'autre de ladite partie centrale plane (10*a*), deux renforts en saillie (10b) dont une extrémité est repliée deux fois à l'équerre pour déterminer un rebord (10*c*) apte à se crocheter contre le bord correspondant (13*a*) de deux saillies (13) du boîtier (2—3), tandis que l'extrémité opposée de chacun desdits renforts est conformée de manière à définir un crochet (10b) agencé pour prendre appui contre le bord en vis-à-vis des saillies précitées moyennant une déformation élastique momentanée de l'ouverture dudit crochet.

2. Dispositif suivant la revendication 1, caractérisé en ce que la fixation de l'extrémité libre du ressort (9) sur l'agrafe (10) est opérée à l'aide de vis ou rivets (11) et d'une plaquette d'appui (12) à profil arqué, qui est profilée de manière à ce que son bord libre forme butée pour un bec latéral (7*a*) prévu sur le balai correspondant (7) en limitant ainsi le déplacement de celui-ci sous l'effet de l'usure.

3. Dispositif suivant l'une quelconque des revendications 1 et 2, caractérisé en ce que les gaines (2*d*) qui renferment à coulissement les balais (7) sont disposées dans la partie du boîtier (2—3) qui est tournée vers le haut.

4. Dispositif suivant l'une quelconque des revendications 1 à 3, caractérisé en ce que le bord (2*a*) à profil circulaire de la cage (2) du boîtier (2—3) est pris en sandwich entre deux anneaux (4, 5) en matière synthétique qui sont assemblés l'un à l'autre par soudage haute-fréquence.

5. Dispositif suivant la revendication 4, caractérisé en ce que les anneaux isolants (4, 5) définissent, en vis-à-vis d'une série d'ouvertures pratiquées dans le bord (2*a*) de la cage (2), des cheminées (6) pour le passage des vis destinées à la fixation du boîtier (2—3) contre le châssis du véhicule ferroviaire.

## Patentansprüche

1. Vorrichtung zur Strom-Rückführung bei Schienenfahrzeugen mit einem öffenbaren Gehäuse (2), das Bürsten (7) wie auch Druckfedern (9) enthält, deren eines Ende an einem flachen Haltestück (10a) festgelegt ist, um die Bürsten gegen einen sich drehenden Kollektor (8) angedrückt zu halten, dadurch gekennzeichnet, daß das flache Haltestück (10a) Teil einer Klammer (10) ist, die beidseits des flachen, zentralen Mittelteils zwei überstehende Führungsleisten (10b) aufweist, deren eines äußere Ende zweifach winkelig zu einem Halterungshaken (10c) abgekantet ist zum Umgreifen des korrespondierenden Randes (13a) von zwei Vorsprüngen in dem Gehäuses (2—3), während das gegenüber liegende Ende der Führungsleisten so ausgebildet ist, daß es eine Klammer (10*d*) bildet, die mit dem gegenüberliegenden Rand der genannten Vorsprünge mittels elastischer Verformung zum Verriegeln verrastbar und öffenbar ist.

2. Vorrichtung nach Anspruch 1, dadurch gekennzeichnet, daß die Befestigung des äusseren Endes der Feder (9) an der Klammer (10) mit Hilfe von Schrauben oder Nieten (11) und einer Sicherungsplatte (12) mit einer Abbiegung erfolgt, die derart geformt ist, daß ihr freier Rand den Anschlag für eine an der zugeordneten Büste (7) vorgesehenen seitlichen Nase (7a) bildet und so deren durch der Verschleiß bedingten Verschiebungweg begrenzt.

3. Vorrichtung nach einem der Ansprüche 1 und 2, dadurch gekennzeichnet, daß Wangen (2d), die die Bürsten (7) als Gleitbahnen umgeben, in dem nach oben abklappbaren Teil des Gehäuses (2—3) angeordnet sind.

4. Vorrichtung nach einem der Ansprüche 1 bis 3, dadurch gekennzeichnet, daß der kreisförmige Flansch (2a) des Gehäuses (2) des Gehäuses (2—3) sandwichartig von zwei miteinander durch Hochfrequenzschweißung verbundenen Ringen (4,5) aus Kunststoff umschlossen ist.

5. Vorrichtung nach Anspruch 4, dadurch gekennzeichnet, daß in dem Flansch (2a) des Gehäuses (2) Ausnehmungen vorgesehen sind, für die die umschließenden isolierenden Ringe (4, 5) korrespondierende Löcher aufweisen, zum Einsetzen der zur Befestigung des Gehäuses (2—3) gegen das Fahrgestell des Schienenfahrzeuges bestimmten Schrauben.

## Claims

1. Electric current return device for railway vehicles, of the type comprising an openable box (2) containing brushes (7) which are held against a rotary collector (8) by means of pressure springs (9) each secured via one of its ends to a fixed portion having a flat section (10*a*), characterised in that the flat securing portion (10*a*) forms part of a clip (10) comprising two projecting reinforcements (10*b*), one on either side of the said flat central portion, one end of each reinforcement being bent over twice at a right angle in order to define a raised edge (10*c*) adapted to hook onto the corresponding edge (13*a*) of two projections (13) of the box (2—3), while the opposite end of each of the said reinforcements is shaped so as to define a hook (10*b*) adapted to rest on the edge opposite the said projections by means of temporary set of the opening of the said hook.

2. Device according to claim 1, characterised in that the free end of the spring (9) is secured to the clip (10) with the aid of screws or rivets (11) and a bearing plate (12) having an arc-shaped section and shaped so that its free end forms a stop for a lateral nose (7*a*) provided on the corresponding brush (7), thereby limiting its displacement as a result of wear.

3. Device according to either claim 1 or claim 2, characterised in that the covers (2*b*) enclosing the brushes (7) in a sliding manner are disposed in the portion of the box (2—3) turned upwards.

4. Device according to any one of claims 1 to 3, characterised in that the edge (2*a*) of the housing (2) of the box (2—3) having a circular section is sandwiched between two rings (4, 5) of synthetic material joined together by high-frequency welding.

5. Device according to claim 4, characterised in that, opposite a series of openings formed in the edge (2*a*) of the housing (2), the insulating rings (4, 5) define holes (6) for the passage of screws for securing the box (2—3) to the underframe of the railway vehicle.

II
6
4
1
2b
7
1
2
7a
9
2b
2b
7a
10
7
9
10
7a
9
6
6
3
15
7
1
1
II
5
2a
Fig. 1

6
14
2b
2
7a
12
7
9
11
10
3
10c
10b
10a
9
10d
7
11
15
8
2a
4
5

Fig. 2

9
7
10d
10
7a
10b
10a
12
10d
10c
11
9
13b
13
10c
10b
13a
Fig. 3

2
8
9
7
10d
13
12
13a
13b
10b
10
7a
10a
11
2b
10c

Fig. 4